# EUROPÄISCHE PATENTSCHRIFT

(11) **EP 2 159 172 B1**
(45) Veröffentlichungstag und Bekanntmachung des Hinweises auf die Patenterteilung: **24.11.2010**
(21) Anmeldenummer: 08163531.0
(22) Anmeldetag: 02.09.2008
(51) Int. Cl.: B65G 29/00, B65G 47/84

(54) **Transportstern**
Star wheel conveyor
Convoyeur de type caroussel

(43) Veröffentlichungstag der Anmeldung: 03.03.2010
(73) Patentinhaber: Tyrolon-Schulnig GmbH, 6395 Hochfilzen (AT)
(72) Erfinder: Schulnig, Elmar, 6391, Fieberbrunn (AT); Schulnig, Ludwig, 6391, Fieberbrunn (AT)
(74) Vertreter: Rupprecht, Kay

(56) Entgegenhaltungen:
- EP-A- 0 659 683
- WO-A-03/078285
- DE-U1- 20 305 988
- US-A- 2 788 818
- US-A- 5 711 411

## Beschreibung

Vorliegende Erfindung betrifft einen Transportstern für Gefäße oder dergleichen Körper, mit einem rotierbaren Grundkörper und mehreren über dessen Umfang verteilten Greifeinrichtungen zum Greifen der Gefäße, wobei jede Greifeinrichtung paarweise korrespondierende, insbesondere zum Grundkörper radial angeordnete Greifarme aufweist, die durch eine Zentrierverzahnung in ihrer Greifbewegung miteinander gekoppelt sind, wobei wenigstens ein Greifarm eine Justiervorrichtung aufweist, mittels derer der Wirkeingriff der Zentrierverzahnung einstellbar ist. Ein solcher Transportstern ist aus der US 2,788, 818 bekannt.

Derartige Transportsterne für Gefäße sind dem Grunde nach bekannt, beispielsweise aus Befüllungsmaschinen aus der Getränkeindustrie. Dabei werden dem Transportstern unter anderem über Fliesbänder Gefäße zugeführt, die dann von den paarweise angeordneten Greifarmen erfasst und vom rotierenden Transportstern vom zuführenden Fliesband genommen werden. Der Transportstern rotiert dann so lange, bis sich die Gefäße, die vom Fliesband genommen wurden, an der richtigen Position, beispielsweise über einem neuen Fliesband, befinden. Über eine entsprechende Steuereinrichtung öffnen sich dann die geschlossenen Greifarme und geben die Gefäße frei.

Aus dem Stand der Technik sind Transportsterne bekannt, bei denen die Greifarme in einem aus zwei parallelen, kreisförmigen Ringen aufgebauten Grundkörper radial nach au ßen weisend angeordnet sind. Diese Greifarme sind parallel zur Rotationsachse des Grundkörpers beweglich gelagert und können somit gegeneinander von einer Öffnungsin eine Schließstellung und umgekehrt bewegt werden. Die Steuerung dieses Öffnungs- bzw. Schließvorganges wird dabei auf unterschiedliche Art und Weise realisiert.

Ein Transportstern der oben genannten Art ist in der DE 296 07 868 U1 beschrieben, wobei hier die Greifarme als Doppelhebel, mit im Wesentlichen radial nach außen weisenden Greifzangen und im Wesentlichen radial nach innen weisenden Gegenarmen ausgebildet sind. Zwischen diesen Gegenarmen ist ein Spreizkörper angeordnet, der die beiden Gegenarme nach außen drängt und somit die radial nach außen weisenden Greifarme in eine Schließposition bringt. Eine Öffnungsposition wird erreicht, indem der Spreizkörper die Annäherung der Gegenarme wieder zulässt, wodurch sich die Greifarme wieder öffnen. Problematisch hat sich hier jedoch herausgestellt, dass, sollte ein Austausch verschlissener Greifarme nötig sein, diese Reparatur sehr aufwendig und zeitintensiv ist, was einen langen Produktionsstillstand und natürlich hohe Kosten verursacht. Darüber hinaus ist diese Ausführungsform aufgrund ihrer starren Greifmechanismen sehr fehleranfällig, da etwaige Ungenauigkeiten nicht kompensiert werden können.

Eine andere Ausführungsform zeigt die DE 296 02 798 U1. Hier bestehen die Greifzangen ebenfalls aus radial nach außen weisenden Greifarmen. Allerdings ist hier nur bei einem Greifarm ein radial nach innen weisender Gegenarm ausgebildet. Dieser Gegenarm liegt an einer senkrecht zur Rotationsachse des Grundkörpers angeordneten Nockenwelle an, die das Steuerorgan bildet. Durch Rotation dieser Nockenwelle wird die Greifeinrichtung in eine Schließ- bzw. Öffnungsstellung gebracht. Dabei erfolgt das Auseinanderdrücken der Greifarme von der Schließ- in die Öffnungsstellung durch eine Druckfeder, die zwischen den beiden radial nach außen Greifarmen angeordnet ist. Damit die Greifbewegung gleichmäßig durchgeführt wird, sind die beiden Greifarme durch eine Zentrierverzahnung miteinander gekoppelt. Nachteilig hat sich hier jedoch herausgestellt, dass bei einem Verschleiß der Zentrierverzahnung eine aufwendige Reparatur nötig ist, was auch hier zu einem langen Produktionsstillstand und zu hohen Kosten führt.

Eine weitere Ausführung eines Transportsterns ist durch die DE 203 05 988 U1 offenbart. Hier sind eigenständige Greifeinrichtungen an der Unterseite eines Tragrings angeordnet, so dass defekte Greifeinrichtungen sehr einfach ausgetauscht werden können. Die Greifarme einer jeden Greifeinrichtung sind wieder paarweise korrespondierend zum Tragring radial nach außen weisend angeordnet und über eine Steuereinrichtung von der Schließ- in die Öffnungsstellung und umgekehrt bewegbar. Die Greifarme selber bestehen aus radial nach außen weisenden Greifarmen und radial nach innen weisenden Gegenarmen. An den Gegenarmen ist eine Zentrierverzahnung derart angeordnet, dass die Greifarme in ihrer Bewegung zwischen der Öffnungs- und der Schließstellung miteinander gekoppelt sind. Als nachteilig hat sich auch hier herausgestellt, dass bei einem Verschleiß der Zentrierverzahnung zwar die Greifarme, im Unterschied zum restlichen Stand der Technik, sehr einfach auszutauschen sind, dieser Austausch aber trotzdem einen relativ langen Produktionsstillstand bedeutet.

US 2,788,818 zeigt eine Maschine zum Bearbeiten insbesondere Greifen von Früchten. Diese Maschine greift ebenfalls auf einem Transportstern mit einem rotierbaren Grundkörper und mehreren über dessen Umfang verteilten Greifeinrichtungen zum Greifen der Früchte zurück, wobei jede Greifeinrichtung paarweise korrespondierende, insbesondere zum Grundkörper radial angeordnete Greifarme aufweist, die durch eine Zentrierverzahnung in ihrer Greifbewegung miteinander gekoppelt sind. Die Greifarme werden dabei über eine Kraftfeder miteinander in Wirkverbindung gebracht. Nachteilig bei der hier gezeigten Ausführungsform ist jedoch ebenfalls, dass eine genaue Justierung der beiden Greifarme und insbesondere deren Zentrierverzahnung ohne längeren Stillstand der Maschine und auf zuverlässige Art und Weise nicht möglich ist.

Aufgabe der vorliegenden Erfindung ist es folglich einen Transportstern der zuvor genannten Art anzubieten, der eine verbesserte Wartungsfreundlichkeit und Betriebseffizienz aufweist.

Diese Aufgabe wird durch einen Transportstern nach Patentanspruch 1 gelöst.

Diese Aufgabe wird durch einen Transportstern für Gefäße oder dergleichen Körper, mit einem rotierbaren Grundkörper und mehreren über dessen Umfang verteilten Greifeinrichtungen zum Greifen der Gefäße, wobei jede Greifeinrichtung paarweise korrespondierende, insbesondere zum Grundkörper radial angeordnete Greifarme aufweist, die durch eine Zentrierverzahnung in ihrer Greifbewegung miteinander gekoppelt sind, wobei wenigstens ein Greifarm eine Justiervorrichtung aufweist, mittels derer der Wirkeingriff der Zentrierverzahnung einstellbar ist gelöst, wobei der wenig stens eine Greifarm über einen exzentrischen Lagerzylinder eines Lagerbolzens an einer Zentraleinheit der Greifeinrichtung gelagert ist, wobei der exzentrische Lagerzylinder bei einer Rotation des Lagerbolzens als Justiervorrichtung wirkt.

Die zwischen den paarweise korrespondierend angeordneten Greifarmen wirkende Zentrierzahnung ist bei Transportstern grundsätzlich aufgrund der sehr hohen Öffnungs- und Schließbewegungsraten einem starken Verschleiß unterworfen. Muss beim Stand der Technik bei einer verschlissenen Zentrierverzahnung der gesamte Greifarm oder gar die gesamte Greifeinrichtung ausgetauscht werden, so ermöglicht die erfindungsgemäße Lösung eine sehr schnelle und einfache Nachjustierung, die nur einen geringen Produktionsstillstand nach sich zieht. Sobald also eine Greifeinrichtung eine bestimmte Anzahl an Arbeitszyklen absolviert hat und die Zentrierverzahnung einen maximal zulässigen Verschleißzustand erreicht hat, kann sehr schnell mittels der Justierungsvorrichtung eine Nachjustierung erfolgen, so dass die Zentrierverzahnung wieder eine volle Funktionalität aufweist. Erst bei Erreichen einer maximalen Verschleißgrenze, müssen dann die Greifarme, oder je nach Ausbildung, beispielsweise bei einer lösbar im Greifarm ausgebildeten Zentrierverzahnung, die Zentrierverzahnung selbst ausgetauscht werden.

Es ist bekannt Transportsterne derart auszubilden, dass die Zentrierverzahnung eine Rotationsverzahnung mit wenigstens zwei komplementären Verzahnungselementen ist, die an den korrespondierenden Greifarmen ausgebildet und konzentrisch zu deren Rotationsachsen angeordnet sind. Bei der Rotation der jeweiligen Greifarme während der Offnungs- und Schließbewegung rotieren so die Verzahnungselemente in gegenseitigem Eingriff, wodurch die Greifarme in ihrer Greifbewegung miteinander gekoppelt werden.

Der wenigstens eine Greifarm ist über einen exzentrischen Lagerzylinder eines Lagerbolzens an einer Zentraleinheit der Greifeinrichtung gelagert, wobei der exzentrische Lagerzylinder bei einer Rotation des Lagerbolzens als Justiervorrichtung wirkt. Unter Zentraleinheit ist hier ein Gehäuse zu verstehen, das den Lagerbolzen im Wesentlichen ortsfest aufnimmt und so die Lagerung der Greifarme erlaubt. Durch die Anordnung eines exzentrischen Lagerzylinders am Lagerbolzen kann über die Exzentrizität bei einer Drehung des Lagerbolzens die Position des Greifarmes relativ zur Achse des Lagerbolzens, der so genannten Justierachse, verändert werden.

Vorzugsweise ist bei einer solchen Ausführungsform das an dem wenigstens einen Greifarm angeordnete Verzahnungselement, also das Verzahnungselement, das zusammen mit dem Greifarm mittels der Justiervorrichtung manipulierbar ist, mittels der Justiervorrichtung zur Einstellung einer im Wesentlichen spielfreien Rotationsverzahnung auf das andere komplementäre Verzahnungselement zubewegbar. Sind an beiden Greifarmen Justiervorrichtung oder justierbare Verzahnungselemente angeordnet, gilt dies natürlich entsprechend auch für beide Greifarme. Bei einer Rotationsverzahnung bewirkt dieses aufeinander Zubewegen bei aufgetretenem Verschleiß wieder eine optimale Funktion der Zentrierverzahnung. Unter spielfrei wird in diesem Zusammenhang eine derartige Anordnung der beiden Verzahnungselemente verstanden, dass eine optimale Funktion bzw. ein optimaler Wirkeingriff der Zentrierverzahnung gewährleistet ist.

Der Lagerbolzen durchdringt dabei vorzugsweise eine Lagerbohrung des Greifarms, wobei diese Lagerbohrung komplementär zum exzentrischen Lagerzylinder ausgebildet ist. Das bedeutet, dass der Greifarm im Wesentlichen passgenau und insbesondere rotierbar über den exzentrischen Lagerzylinder am Lagerbolzen und über diesen an der Zentraleinheit der Greifeinrichtung gelagert ist. Insofern fungiert also der exzentrische Lagerzylinder nicht nur als Justiervorrichtung sondern auch als Rotationslager für den Greifarm und gewährleistet die Greifbewegung zwischen Öffnungs- und Schließstellung. Insofern ist die Rotationsachse des Greifarms gleich der Symmetrie-Längsachse des exzentrischen Lagerzylinders.

In diesem Zusammenhang sind vorzugsweise die Lagerbohrung und/oder der Lagerzylinder mit einer reibungsreduzierenden Beschichtung oder einem dergleichen Element ausgestattet, um Verschleiß zu reduzieren. Hier sind sämtliche aus dem Stand der Technik bekannten Vorrichtungen anwendbar.

Durch die passgenaue Anordnung des exzentrischen Lagerzylinders in der Lagerbohrung ist der Greifarm bei einer Drehung des Lagerbolzens spielfrei und sehr präzise verschiebbar, so dass eine exakte Neujustierung der Zentrierverzahnung möglich ist. Neben einer integralen Ausbildung des Verzahnungselementes am Greifarm ist es möglich, das Verzahnungselement der Zentrierverzahnung lösbar arretierbar am Greifarm anzuordnen, um eventuelle Winkelabweichungen bei der Verschiebung des Greifarmes durch die Drehung des exzentrischen Lagerzylinders auszugleichen. Hier ist beispielsweise die Verwendung einer gerasteten Lagereinrichtung zwischen Verzahnungselement und Greifarm verwendbar.

Vorzugsweise weist der Lagerbolzen, konzentrisch zu seiner Justierachse, insbesondere an seinen freien Enden einen Lagerbolzenkopf und einen Lagerbolzenfuss auf, die in jeweils komplementären Lagerbolzenaufnahmen an der Zentraleinheit angeordnet sind und wobei die Symmetrieachse des exzentrischen Lagerzylinders, im folgenden als Zylinderachse bezeichnet, exzentrisch und achsenparallel zu dieser Justierachse angeordnet ist. Über den Lagerbolzenkopf und den Lagerbolzenfuss kann der Lagerbolzen passgenau und ortsfest an der Zentraleinheit angeordnet werden, so dass durch eine Drehung des Lagerbolzens in seinen entsprechenden Lageraufnahmen an der Zentraleinheit eine spielfreie Justierung der Zentrierverzahnung möglich wird. Durch die exzentrische Anordnung der Zylinderachse des Lagerzylinders zu der Justierachse des Lagerbolzens, um die der Lagerbolzen zur Justierung gedreht wird, verschiebt sich der über den Lagerzylinder gelagerte Greifarm relativ zur Justierachse, so dass er sich, je nach Drehrichtung, auf das korrespondierend angeordnete andere Verzahnungselement der Zentrierverzahnung zu- oder wegbewegt.

Der Lagerbolzenkopf und der Lagerbolzenfuss sind dazu vorzugsweise in ihrem Außenumfang rotationssymmetrisch ausgebildet, so dass durch eine schlichte Drehung des Lagerbolzens das über die Justiervorrichtung bewegbare Verzahnungselement in jeder Position anordbar ist.

Vorzugsweise ist der exzentrische Lagerzylinder in Richtung der Justierachse zwischen dem Lagerbolzenkopf und dem Lagerbolzenfuss angeordnet. Auf diese Weise wird die statische Stabilität der Lagerung des Greifarms am exzentrischen Lagerzylinder erhöht. Vorzugsweise ist der Lagerbolzen in der Zentraleinheit der Greifeinrichtung mittels einer Arretierungseinrichtung lösbar, insbesondere rotationsarretierend gelagert. Auf diese Weise wird sichergestellt, dass nach einer Justierung der Zentrierverzahnung, also nach einer Rotation des Lagerbolzens, diese Justierung auch während des darauf folgenden Betriebs des Transportsterns beibehalten bleibt.

Vorzugsweise weist die Arretierungseinrichtung ein Arretierungselement am Lagerbolzenkopf und/oder am Lagerbolzenfuss und wenigstens ein komplementäres Arretierungsgegenelement an der Zentraleinheit auf, wobei das Arretierungselement in einer Lagerbolzenarretierungsstellung den Lagerbolzen rotationsarretierendell in das Arretierungsgegenelement lösbar eingreift.

Ein solches Arretierungselement kann beispielsweise eine Innen-n-Kant und insbesondere einen Innen-12-Kant sein, wobei das Arretierungsgegenelement dann als ein komplementärer Außen-n-Kant bzw. außen-12-Kant ausgebildet ist. "n" steht hier für eine ganze Anzahl an Kanten, wobei bei einer höheren Zahl n eine immer genauere Justierung des gedrehten Lagerbolzens möglich ist. Natürlich ist darauf zu achten, dass bei einer zu hohen Zahl n aufgrund der vorhandenen Materialelastizität keine Arretierungswirkung erzielbar sein wird. Insofern hat sich eine Kantenzahl von n = 12 als betriebssicher herausgestellt. Natürlich können aber auch andere Zahlen n gewählt werden.

Vorzugsweise sind das Arretierungselement und das Arretierungsgegenelement derart ausgebildet, dass der Arretierungseingriff durch eine Axialverschiebung in Richtung der Justierachse des Lagerbolzens lösbar und durch eine entgegengesetzte Axialverschiebung wieder herstellbar ist. Das bedeutet, dass also, wenn sich das Arretierungselement im Wirkeingriff mit dem Arretierungsgegenelement befindet, der Lagerbolzen axial verschoben wird, so dass sich dieser Arretierungseingriff löst. Anschließend kann der Lagerbolzen gedreht und somit die Zentrierverzahnung nachjustiert werden. Sobald eine optimale, d.h. also beispielsweise spielfreie Zentrierverzahnung eingestellt ist, kann der Lagerbolzen wieder entgegengesetzt axial verschoben werden, so dass das Arretierungselement wieder in das Arretierungsgegenelement eingreift. In diesem Zusammenhang ist darauf zu achten, dass der Lagerzylinder in Richtung der Justierachse eine ausreichende Länge aufweist, um zu verhindern, dass er, beim Verschieben des Lagerbolzens zum Außereingriffbringen des Arretierungseingriffs, aus seiner Lagerung in der Lagerbohrung am Greifarm herausrutscht.

Vorzugsweise weisen der Lagerbolzen und insbesondere der Lagerbolzenkopf und/oder Lagerbolzenfuss ein Justiermittel und insbesondere einen von der Außenseite des Transportsterns frei zugänglichen Innen-6-Kant auf, zur Manipulation des Arretierungseingriffes zwischen Arretierungselement und Arretierungsgegenelement und/oder zur Rotation des Lagerbolzens zur Einstellung des Wirkeingriffes der Zentrierverzahnung. Das zuvor genannte Justiermittel ermöglicht also die zuvor genannte Axialverschiebung zur Lösung des Arretierungseingriffes durchzuführen und/oder die Rotation des Lagerbolzens, um die Zentrierverzahnung einzustellen. Natürlich können hier auch andere aus dem Stand der Technik bekannte Vorrichtungen als ein solches Justiermittel verwendet werden.

Vorzugsweise ist ein Fixiermittel zur lösbaren Arretierung des Lagerbolzens gegen die Verschiebung in Axialrichtung vorgesehen. Eine solches Fixiermittel kann beispielsweise eine lösbare Klebeverbindung sein, die zwischen Lagerbolzen und dessen Lageraufnahmen wirkt oder aber ein entsprechend mechanisches Fixiermittel, dass mit dem Lagerbolzen oder dessen Lagerung in Wirkeingriff und außer Wirkeingriff bringbar ist.

Vorzugsweise sind der Lagerbolzen und/oder der Lagerbolzenfuss über wenigstens ein Befestigungsmittel, insbesondere lösbar am Lagerzylinder angeordnet. Ein solches Befestigungsmittel kann beispielsweise eine Schraubverbindung sein oder aber jedes andere aus dem Stand der Technik bekannte entsprechend wirkende Befestigungsmittel. Diese "mehrteilige" Ausführung des Lagerbolzens ermöglicht zum einen den Austausch eventuell verschlissener Bauteile und zum anderen die Adaption der einzelnen Bauteile an unterschiedlichen Rahmenbedingungen.

Weitere Ausführungsformen der Erfindung ergeben sich aus den Unteransprüchen.

Im Folgenden wir die Erfindung anhand von Ausführungsbeispielen beschrieben, die durch die beiliegenden Zeichnungen näher erläutert werden. Hierbei zeigen:
- Fig. 1:: eine isometrische Darstellung einer Ausführungsform des Transport- sterns;
- Fig. 2:: eine isometrische Darstellung einer Greifeinrichtung;
- Fig. 3:: eine Explosionsdarstellung der Greifeinrichtung aus Fig. 2;
- Fig. 4:: eine isometrische Darstellung einer Zentraleinheit der Greifeinrich- tung aus Fig. 2;
- Fig. 5:: eine isometrische Darstellung der Greifarme der Greifeinrichtung aus Fig. 2;
- Fig. 6 und 7:: zwei Detailansichten der Greifeinrichtung aus Fig. 3 im Teilschnitt;
- Fig. 8:: eine Detailansicht einer weiteren Ausführungsform einer Greifein- richtung im Teilschnitt;
- Fig. 9:: eine isometrische Detaildarstellung einer Justierungsvorrichtung der Greifeinrichtung aus Fig. 2;
- Fig. 10:: einen Teilschnitt durch einen Lagerbolzen;
- Fig. 11:: eine isometrische Darstellung des Lagerbolzens aus Fig. 10;
- Fig. 12: einen isometrischen Teilschnitt des Lagerbolzens aus Fig. 10;
- Fig. 13:: eine Draufsicht des Lagerbolzens aus Fig. 10;
- Fig. 14:: einen Lagerbolzenkopf des Lagerbolzens aus Fig. 10;
- Fig. 15:: einen exzentrischen Lagerzylinder des Lagerbolzens aus Fig. 10;
- Fig. 16:: eine Draufsicht auf den exzentrischen Lagerzylinder aus Fig. 15;
- Fig. 17:: einen Längsschnitt durch den Lagerzylinder aus Fig. 15; und
- Fig. 18:: einen Lagerbolzenfuss des Lagerbolzens auf Fig. 10.

Im Folgenden werden für gleiche und gleich wirkende Bauteile dieselben Bezugsziffern verwendet, wobei bisweilen Hochindizes ihre Verwendung finden.

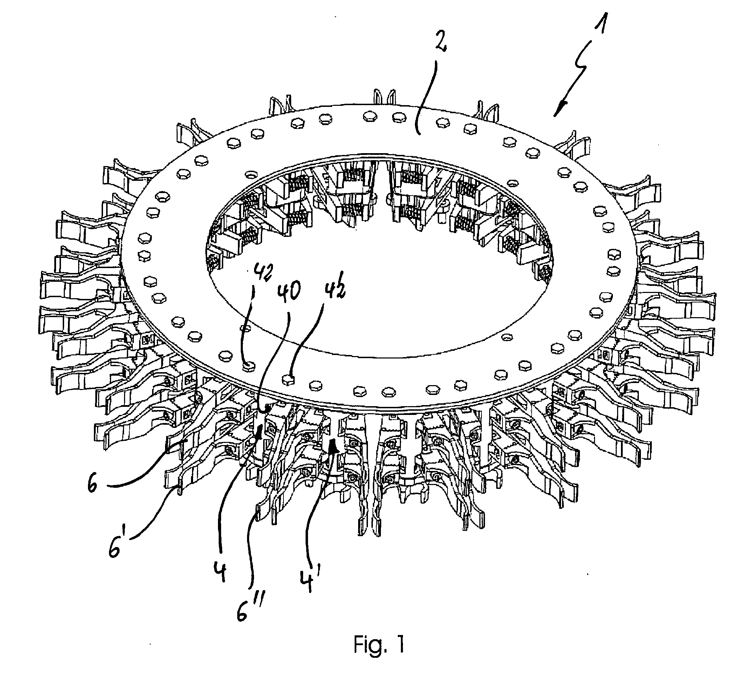

Fig. 1 zeigt eine isometrische Darstellung einer Ausführungsform des erfindungsgemäßen Transportsterns 1. Dieser weist einen Grundkörper 2 auf, über den er mittels geeigneter Rotationsvorrichtung (nicht dargestellt) in Rotation bringbar ist. Am Grundkörper 2 sind unterseitig eine Mehrzahl an Greifeinrichtungen 4 angeordnet, die zum Greifen von Gefäßen oder dergleichen Körper, insbesondere Flaschen, ausgebildet sind. Die Greifeinrichtungen 4 umfassen bei dieser Ausführungsform vier radial nach außen weisende Greifarme 6, die über eine entsprechende Steuereinrichtung 40 zwischen einer Öffnungs- und einer Schließstellung hin- und herbewegbar sind.

Die Greifeinrichtungen 4 sind hier zur einfachen Demontage, insbesondere bei Wartungsarbeiten, über jeweils zwei Montagebolzen 42 am Grundkörper 2 angeordnet.

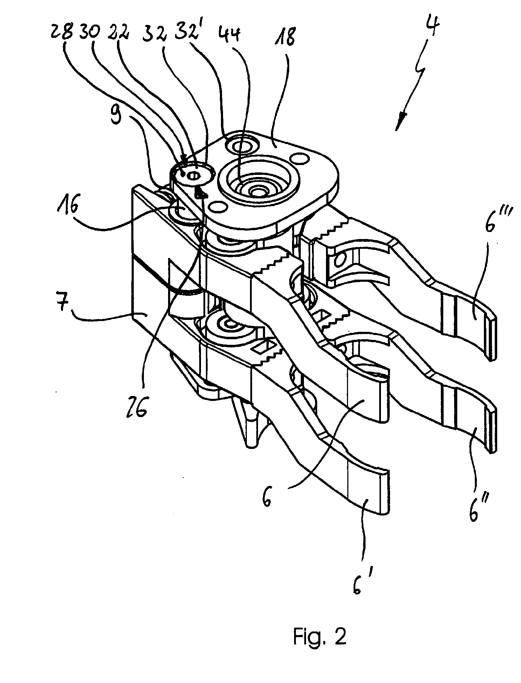

Fig. 2 zeigt eine isometrische Darstellung einer solchen am Grundkörper 2 (siehe Fig. 1) angeordneten Greifeinrichtung 4. Die Greifeinrichtung 4 umfasst vier Greifarme 6, die jeweils zu korrespondierenden Paaren 6, 6'" und 6', 6" angeordnet sind.

Die Greifarme 6 sind über Lagerbolzen 16 an einer Zentraleinheit 18 der Greifeinrichtung 4 verschwenkbar positioniert, so dass sich die nach außen ragenden Greifarme 6 zwischen einer Öffnungs- und einer Schließstellung zum Greifen der zuvor genannten Gefäße bewegen können.

Die Zentraleinheit 18 ist dabei so ausgebildet, dass sie im Wesentlichen biegesteif an der Unterseite des Grundkörpers 2 (siehe Fig. 1) angeschraubt werden kann. Neben der Montagefunktion am Grundkörper 2 und der Aufnahme der Lagerbolzen 16 nimmt die Zentraleinheit 18 auch eine Steuervorrichtung 44 auf, die über ein Spreizelement das Öffnen der Greifarme 6 verursacht. An den paarweise korrespondierend angeordneten Greifarmen 6 ist an einem Gegenarmbereich 7 jeweils eine Druckfeder 9 angeordnet, die die Greifarme 6 wieder in eine Schließstellung drängt, sobald die Steuereinrichtung 44 dies ermöglicht.

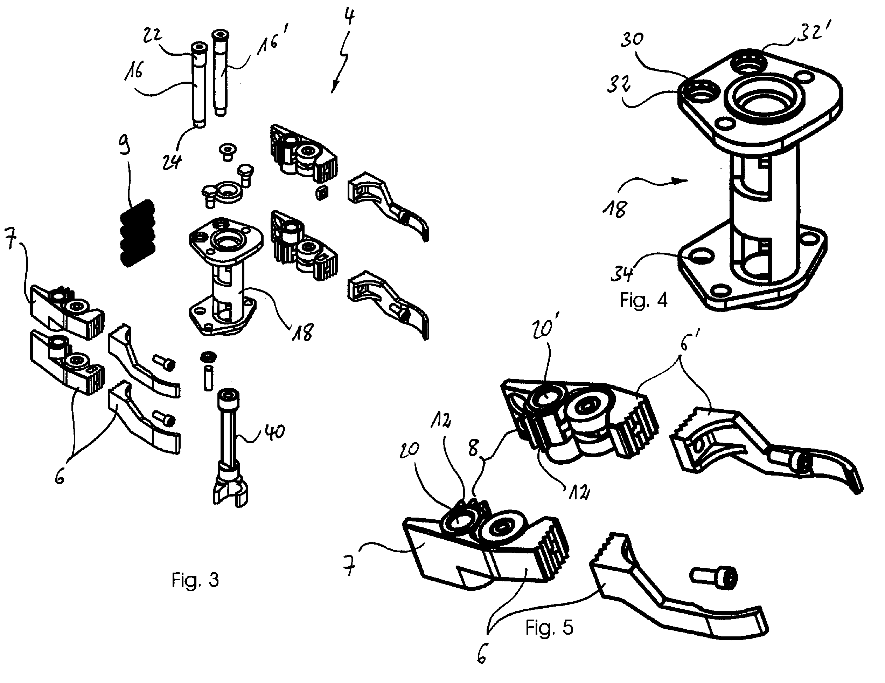

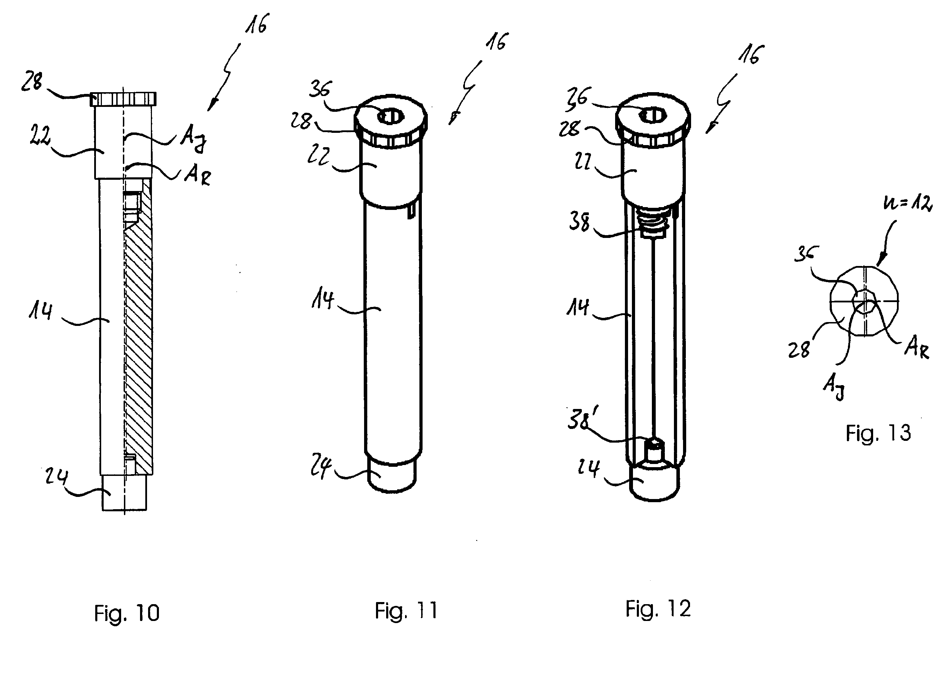

Zur Aufnahme der Lagerbolzen 16 in der Zentraleinheit 18 sind an der Zentraleinheit 18 entsprechende Lagerbolzenaufnahmen 32, 34 (siehe auch Fig. 4) vorgesehen, in die der Lagerbolzen 16 mit einem Lagerbolzenkopf 22 bzw. einem Lagerbolzenfuss 24 (siehe insbesondere Fig. 10-12) eingreift.

Zudem ist innerhalb der Lagerbolzenaufnahme 32 ein Arretierungsgegenelement 30 in Form eines Innen-12-Kant angeordnet, der komplementär zum einem Arretierungselement 28 am Lagerbolzenkopf 22 des Lagerbolzens 16 geformt ist. Dieses Arretierungselement 28 ist folglich als ein komplementär zum Innen-12-Kant 30 geformter Außen-12-Kant 28 ausgebildet. Auf die Funktion dieses Arretierungselementes bzw. Arretierunggegenelementes, die zusammen eine Arretierungseinrichtung bilden, wird im Folgenden noch detailliert eingegangen.

Fig. 3 zeigt eine isometrische Explosionsdarstellung der Greifeinrichtung 4 aus Fig. 2. Dargestellt sind wieder die Greifarme 6, die hier als zweiteilige Greifarme ausgebildet sind, um bei Verschleiß oder zur Anfassung an andere Gefäße entsprechende Anpassungen vornehmen zu können. Ebenfalls ersichtlich ist die Zentraleinheit 18, die die Montage der Greifarme 6 über die Lagerbolzen 16 ermöglicht und ein Gehäuse für die Steuereinrichtung 40 bildet, die hier als exzentrische Nockenwelle ausgebildet ist und über eine Rotation einen Spreizkörper gegen entsprechende Ansätze an den Greifarmen 6 drückt, um diese von einer Schließstellung in eine Öffnungsstellung zu bewegen. Weiter dargestellt sind die Druckfedern 9, die die Greifarme 6 anschließend wieder von der Öffnungsstellung in die Schließstellung bewegen, und am Gegenarmbereich 7 der Greifarme 6 angeordnet sind.

In Fig. 4 ist die Zentraleinheit 18 im Detail dargestellt. Erkennbar sind die Lagerbolzenaufnahmen 32 und 34, in die jeweils der Lagerbolzen 16 mit seinem Lagerbolzenkopf 22 (siehe auch Fig. 3) und seinem Lagerbolzenfuss 24 eingesetzt werden kann. Weiter erkennbar ist, dass bei dieser Ausführungsform nur im oberen Bereich der Lagerbolzenaufnahme 32 angeordnete Arretierungsgegenelement 30, das in Form eines Innen-12-kant eine rotationsarretierende Aufnahme des Lagerbolzens 16 erlaubt, wie im Folgenden noch detailliert beschrieben werden wird.

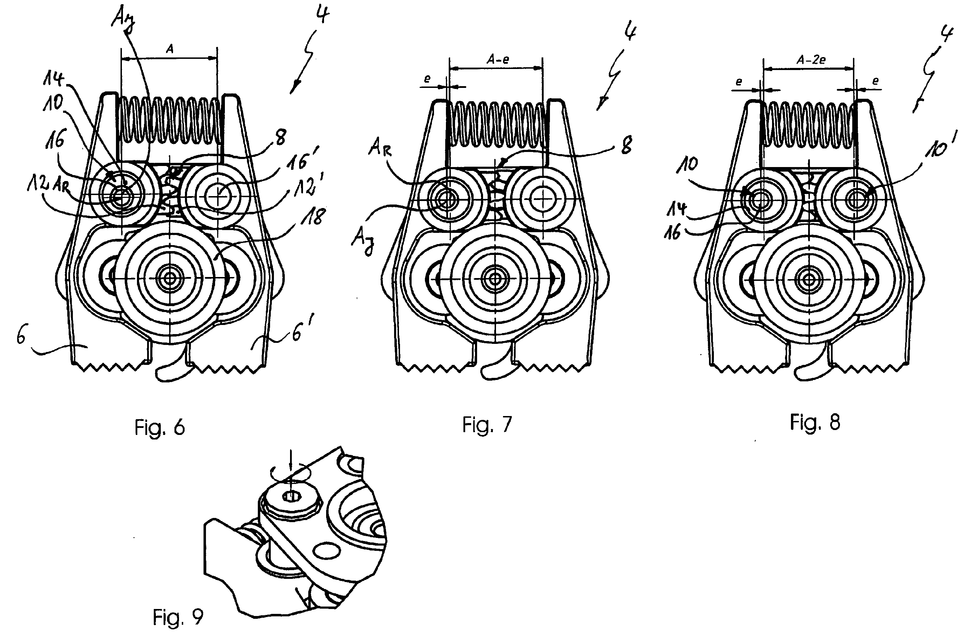

Fig. 5 zeigt eine isometrische Detailansicht der in Fig. 3 dargestellten Greifarme 6. Im Gegenarmbereich 7 ist neben einer Lagerbohrung 20 zur Aufnahme des Lagerbolzens 16 bzw. wie im Folgenden noch detailliert beschrieben wird, zur Aufnahme eines exzentrischen Lagerzylinders 14 (siehe insbesondere Fig. 6-8) jeweils ein Verzahnungselement 12 angeordnet, das bei montierter Greifeinrichtung 4 mit einem korrespondierenden Verzahnungselement 12' des anderen Greifarmes 6' eine Zentrierverzahnung 8 bildet. Diese Zentrierverzahnung 8 garantiert, dass sich die Greifarme 6 auch bei ungleichmäßiger Belastung gleichmäßig zwischen der Öffnungs- und der Schließstellung hin- und herbewegen. Da eine hier gezeigte Greifeinrichtung 4 (siehe Fig. 2) während ihres Betriebs einer Unmenge an Öffnungs- und Schließbewegungen ausgesetzt ist, kommt es insbesondere im Bereich dieser Zentrierverzahnung 8 zu starken Abnutzungserscheinungen. Sobald diese Abnutzungen auftreten ist bei der hier gezeigten Greifeinrichtung 4 erfindungsgemäß eine Nachjustierung der Zentrierverzahnung 8 möglich. Diese wird in den folgenden

Figuren hinsichtlich ihrer Funktion und Wirkung beschrieben.

Die Fig. 6 und 7 zeigen eine Draufsicht auf die Greifeinrichtung 4 aus Fig. 2 im Teilschnitt, wobei das besondere Augenmerk hier auf der Nachjustierung der Zentrierverzahnung 8 der Greifarme 6 liegt. Dargestellt sind wieder die über den Lagerbolzen 16 an der (geschnitten dargestellten) Zentraleinheit 18 verschwenkbar angeordneten Greifarme 6. Um eine gleichmäßige Greifbewegung der Greifarme 6 zu gewährleisten sind, wie bereits erwähnt, die Greifarme 6 über eine Zentrierverzahnung 8 miteinander gekoppelt. Die Zentrierverzahnung 8 umfasst zwei Verzahnungselemente 12, die jeweils integral an den Greifarmen angeordnet sind.

Die Verzahnungselemente 12 sind hier konzentrisch zur Rotationsachse A_{R} der Greifarme 6 angeordnet, so dass bei einer Rotation der Greifarme 6 um deren Rotationsachse A_{R} die ineinander greifenden Verzahnungselemente 12 eine rotierende Rotationsverzahnung 8 bilden.

Aufgrund Materialabriebs kommt es im Laufe der Zeit zwischen diesen Verzahnungselementen 12 zu einem Verschleiß und so zu einem Spiel innerhalb der Zentrierverzahnung 8. Dies ist in Fig. 6 dargestellt. Um dieses Spiel auszugleichen weist der hier in Fig. 6 auf der linken Darstellungsebene dargestellte Greifarm 6 eine Justiervorrichtung 10 auf, über die der Wirkeingriff der Zentrierverzahnung 8 einstellbar ist.

Die Justiervorrichtung 10 umfasst einen exzentrischen Lagerzylinder 14, der am Lagerbolzen 16 angeordnet ist und bei einer Rotation des Lagerbolzens 14 um seine Justierachse A_{J} das Verzahnungselement 12 auf das komplementäre Verzahnungselement 12' zu bewegt.

Der exzentrische Lagerzylinder 14 wirkt hier zudem als Rotationslager für den Greifarm 6, so dass die Symmetrieachse des exzentrischen Lagerzylinders 14, die Zylinderachse A_{R}, gleichzeitig auch die Rotationsachse A_{R} für die Öffnungs- und Schließbewegungen des Greifarms 6 bildet.

Wie in den Fig. 6 und 7 dargestellt verläuft die Zylinderachse bzw. die Rotationsachse A_{R} des exzentrischen Lagerzylinders 16 achsenparallel und versetzt zur Justierachse A_{J} des Lagerbolzens 16. Bei einer insbesondere in Fig. 9 dargestellten Drehung des Lagerbolzens 16 verschiebt sich so der exzentrische Lagerzylinder 14 in Richtung des komplementären Verzahnungselements 12', wodurch das am Greifarm 6 angeordnete Verzahnungselement 12 auf dieses Verzahnungselement 12' zu bewegt wird. Der Wirkeingriff der Zentrierverzahnung 8 ist so einstellbar.

Eine solche justierte Stellung ist in Fig. 7 dargestellt. Betrug der Abstand der beiden Rotationsachsen A_{R} der beiden Greifarme 6 im unjustierten Zustand (siehe Fig. 6) noch den Wert A, ist er nach der Justierung auf Wert A-e verringert, wobei e die Exzentrizität zwischen der Rotationsachse A_{R} des Lagerzylinders 14 und der Justierachse A_{J} des Lagerbolzens 16 markiert. Bei der in Fig. 7 dargestellten Justierung wurde der Lagerbolzen 16 folglich um 45° gedreht. Bei einer Rück-Drehung des Lagerbolzens 14, also ausgehend von der in Fig. 7 dargestellten Position in entgegengesetzter Richtung, würde sich der Abstand wieder vergrößern.

Fig. 8 zeigt eine zu der in den Fig. 6 und 7 dargestellten Greifeinrichtung ähnliche Ausführungsform. Allerdings weisen hier beide Greifarme 6 Justiervorrichtungen 10 auf, so dass eine gleichmäßige und insbesondere eine doppelt so große Verschiebung der Verzahnungselemente der Zentrierverzahnung 8 möglich ist.

Die Fig. 10 bis 18 zeigen nun unterschiedliche Detaildarstellungen des Lagerbolzens 16.

So ist in den Figuren 10 bis 12 der Lagerbolzen sowohl im Schnitt (Fig. 10) als auch in einer Isometrie (Fig. 11) bzw. einer teilgeschnittenen Isometrie (Fig. 12) dargestellt. Erkennbar ist der Lagerbolzenkopf 22 und der Lagerbolzenfuss 24, zwischen den der exzentrische Lagerzylinder 14 angeordnet ist. Die Exzentrizität zwischen der Justierachse A_{J} und der Rotationsachse A_{R}, die der Zylinderachse des exzentrischen Lagerzylinders 14 entspricht, ist insbesondere in Fig. 10 erkennbar.

Weiter dargestellt ist am Lagerbolzenkopf 22 ein Teil der Arretierungseinrichtung 26 (siehe Fig. 26), die eine Rotationsarretierung des Lagerbolzens 16 bzw. des exzentrischen Lagerzylinders 14 in den jeweiligen Lagerboizenaufnahmen 32, 34 an der Zentraleinheit 18 (siehe Fig. 3 und 4) erlaubt. Der hier dargestellte Teil der Arretierungseinrichtung 26 umfasst das Arretierungselement 28, das als Außen-12-Kant ausgebildet ist und passgenau und rotationsarretierend in das Arretierungsgegenelement 30 an der Zentraleinheit 18 (siehe Fig. 4) eingreift. Durch die 12-Kant-Form ist der Lagerbolzen 16 in relativ kleinen Rotationsschritten arretierbar. Sind noch geringere Arretierungsschritte nötig, kann anstelle eines 12-Kants auch ein Außen-n-Kant mit einer höheren Kantenzahl n, beispielsweise ein 14-Kant ausgebildet werden.

Um die Justierung der Zentrierverzahnung 8 (siehe Fig. 4-8) durchzuführen, ist am Lagerbolzenkopf 22, wie in den Fig. 11 und 12 dargestellt, ein Justiermittel 36 in Form eines Innen-6-Kant vorgesehen, der die Aufnahme eines herkömmlichen Inbusschlüssels erlaubt und über den der Lagerbolzen 16 einfach drehbar ist. Über eine Gleitreibung zwischen dem Justiermittel 36 und einem eingesetzten Inbusschlüssel (nicht dargestellt) ist darüber hinaus der Lagerbolzen 16 axial, also parallel zur Justierachse A_{J} aus dem Arretierungseingriff zwischen Arretierungselement 28 und Arretierungsgegenelement 30 (siehe Fig. 4) herausziehbar, so dass dann eine Justierung der Zentrierverzahnung 8 (siehe Fig. 6-8) vornehmbar ist. Dieser Zustand ist in Fig. 9 dargestellt. Aus diesem Grund ist das Arretierungselement 28 im Vergleich zum Lagerbolzenkopf 22 sehr flach ausgebildet, so dass der Lagerbolzen 16 nur geringfügig aus seiner Lagerbolzenaufnahme 32 herausgeschoben werden muss, um den Arretierungseingriff frei zu geben.

Um eine einfachere Zugänglichkeit zur Justiervorrichtung 10 bzw. zum Justiermittel 36 der Greifeinrichtung 4 zu gewährleisten ist es möglich den in Fig. 1 dargestellten Grundkörper 2 mit entsprechenden Zugangsöffnungen (nicht dargestellt) zu versehen, über die das Einführen eines Imbusschlüssels oder dergleichen Werkzeuges in das Justiermittel 36 der Justiervorrichtung 10 bzw. des Lagerbolzens 16 möglich ist. Eine solche Zugangsöffnung kann vorzugsweise so ausgebildet sein, dass auch die Achsenverschiebung des Lagebolzen 16 zum Lösen des Arretierungseingriffes und zur anschließenden Justierung ermöglicht wird, ohne dass dazu die Greifeinrichtung 4 vom Grundkörper 2 demontiert werden muss.

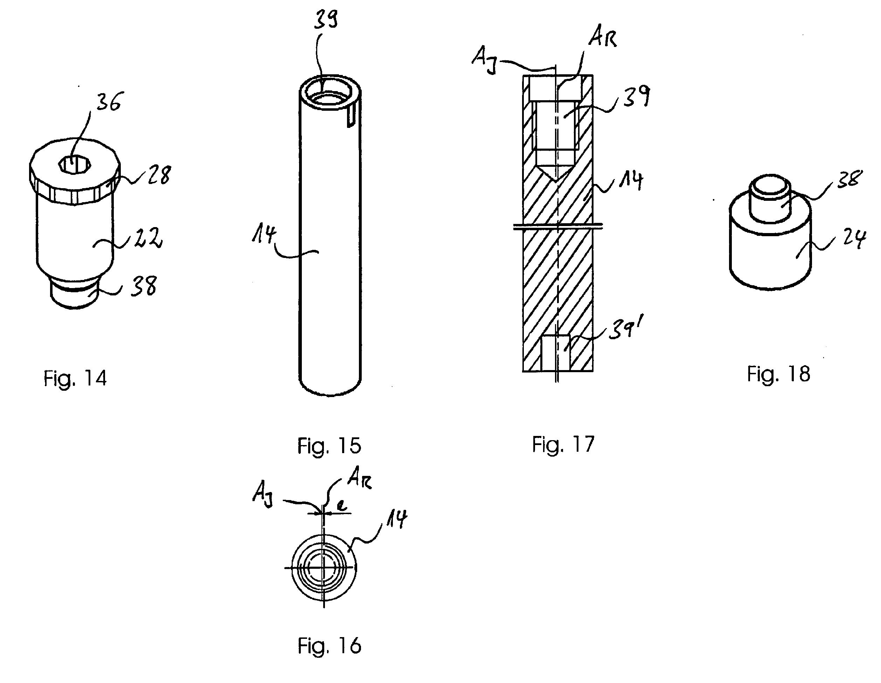

In Fig. 12 ist der Lagerbolzen 16 in einem isometrischen Teilschnitt dargestellt. Erkennbar ist hier, dass sowohl der Lagerbolzenkopf 22 als auch der Lagerbolzenfuss 24 über Befestigungsmittel 38, in diesem Fall Schraubverbindungen, am exzentrischen Lagerzylinder 14 angeordnet ist. Eine solche mehrteilige Ausführung des Lagerbolzens 16 erlaubt den Austausch eventuell defekter Einzelbauteile und die Adaption des exzentrischen Lagerzylinders 14, des Lagerbolzenkopfes 22 und des Lagerbolzenfußes 24 nach Bedarf. Fig. 14 zeigt eine isometrische Darstellung des Lagerbolzenkopfes 22 an dem, zur Montage am exzentrischen Lagerzylinder 14 (siehe Fig. 10-12) das Befestigungsmittel 38 in Form eines Schraubbolzens integral ausgebildet ist. Ebenfalls dargestellt ist das Arretierungselement 28, das die Form eines Außen-12-Kant aufweist, um den Lagerbolzen 16 rotationsarretierend in der Zentraleinheit 18 zu befestigen. Innerhalb des Arretierungselementes 28 ist darüber hinaus das Justiermittel 36, hier als Innen-6-Kant, ausgebildet.

In Fig. 15 ist der exzentrische Lagerzylinder 14 angeordnet, wobei Fig. 16 eine Draufsicht dieses exzentrischen Lagerzylinder 14 zeigt. Erkennbar ist zum einen eine Aufnahme 39 in Form einer Gewindebohrung für das Befestigungsmittel 38 des Lagerbolzenkopfes 22 und zum anderen (in Fig. 16) die zur Justierachse A_{J} des Lagerbolzens 16 exzentrische Anordnung der Zylinderachse des exzentrischen Lagerzylinders 14 bzw. der Rotationsachse A_{R}.

In Fig. 17 ist der exzentrische Lagerzylinder 14 im Längsschnitt dargestellt, wobei wieder die Exzentrizität der Achsen A_{R} bzw. A_{J} und die Aufnahmen 39 für die Befestigungsmittel 38 des Lagerbolzenkopfes 22 bzw. des Lagerbolzenfußes 24 (siehe Fig. 18) erkennbar sind.

Dieser Lagerbolzenfuss 24 ist isometrisch in Fig. 18 dargestellt, wobei auch hier die integrale Ausbildung des Befestigungsmittels 38 erkennbar ist.

### Bezugszeichen

- 1: Transportstern
- 2: Grundkörper
- 4: Greifeinrichtung
- 6: Greifarm
- 7: Gegenarmbereich
- 8: Zentrierverzahnung
- 9: Druckfeder
- 10: Justiervorrichtung
- 12: Verzahnungselement
- 14: exzentrischer Lagerzylinder
- 16: Lagerbolzen
- 18: Zentraleinheit
- 20: Lagerbohrung
- 22: Lagerbolzenkopf
- 24: Lagerbolzenfuss
- 26: Arretierungseinrichtung
- 28: Arretierungselement
- 30: Arretierungsgegenelement
- 32: Lagerbolzenaufnahme
- 34: Lagerbolzenaufnahme
- 36: Justiermittel
- 38: Befestigungsmittel
- 39: Aufnahme
- 40: Steuereinrichtung
- 42: Montagebolzen
- 44: Steuervorrichtung
- A_{R}: Rotationsachse
- A_{J}: Justierachse

## Patentansprüche

1. Transportstern für Gefäße oder dergleichen Körper, mit einem rotierbaren Grundkörper (2) und mehreren über dessen Umfang verteilten Greifeinrichtungen (4) zum Greifen der Gefäße, wobei jede Greifeinrichtung (4) paarweise korrespondierende, insbesondere zum Grundkörper (2) radial angeordnete Greifarme (6) aufweist, die durch eine Zentrierverzahnung (8) in ihrer Greifbewegung miteinander gekoppelt sind, wobei
wenigstens ein Greifarm (6) eine Justiervorrichtung (10) aufweist, mittels derer der Wirkeingriff der Zentrierverzahnung (8) einstellbar ist,
**dadurch gekennzeichnet, dass**
der wenigstens eine Greifarm (6) über einen exzentrischen Lagerzylinder (14) eines Lagerbolzens (16) an einer Zentraleinheit (18) der Greifeinrichtung (2) gelagert ist, wobei der exzentrische Lagerzylinder (14) bei einer Rotation des Lagerbolzens (16) als Justiervorrichtung (10) wirkt.

2. Transportstern nach Anspruch 1,
wobei die Zentrierverzahnung (8) eine Rotationsverzahnung mit wenigstens zwei komplementären Verzahnungselementen (12) ist, die an den korrespondierenden Greifarmen (6) ausgebildet und konzentrisch zu deren Rotationsachsen (A_{R}) angeordnet sind,
**dadurch gekennzeichnet, dass**
das an dem wenigstens einen Greifarm (6) angeordnete Verzahnungselement (12) mittels der Justiervorrichtung (10) zur Einstellung einer im Wesentlichen spielfreien Rotationsverzahnung auf das andere komplementäre Verzahnungselement (12) zu bewegbar ist.

3. Transportstern nach einem der vorhergehenden Ansprüche,
**dadurch gekennzeichnet, dass**
der Lagerbolzen (16) eine Lagerbohrung (20) des Greifarms (6) durchdringt, die komplementär zum exzentrischen Lagerzylinder (14) ausgebildet ist.

4. Transportstern nach einem der vorhergehenden Ansprüche,
**dadurch gekennzeichnet, dass**
der Lagerbolzen (16), insbesondere an seinen freien Enden, konzentrisch zu einer Justierachse (A_{J}) des Lagerbolzens (16) einen Lagerbolzenkopf (22) und einen Lagerbolzenfuss (24) aufweist, die in komplementären Lagerbolzenaufnahmen (32; 34) am Zentraleinheit (18) angeordnet sind, und wobei die Zylinderachse (A_{R}) des exzentrischen Lagerzylinder (14) exzentrisch und achsenparallel zur Justierachse (A_{J}) angeordnet ist.

5. Transportstern nach Anspruch 4,
**dadurch gekennzeichnet, dass**
der Lagerbolzenkopf (22) und der Lagerbolzenfuss (24) in ihrem Außenumfang rotationssymmetrisch ausgebildet sind.

6. Transportstern nach Anspruch 4 oder 5,
**dadurch gekennzeichnet, dass**
der exzentrische Lagerzylinder (14) in Richtung der Justierachse (A_{J}) zwischen dem Lagerbolzenkopf (22) und dem Lagerbolzenfuss (24) angeordnet ist.

7. Transportstern nach einem der vorhergehenden Ansprüche,
**dadurch gekennzeichnet, dass**
der Lagerbolzen (16) in der Zentraleinheit (18) der Greifeinrichtung (2) mittels einer Arretierungseinrichtung (26) lösbar, insbesondere rotationsarretierbar gelagert ist.

8. Transportstern nach Anspruch 7,
**dadurch gekennzeichnet, dass**
die Arretierungseinrichtung (26) ein Arretierungselement (28) am Lagerbolzenkopf (22) und/oder am Lagerbolzenfuss (24) und wenigstens ein komplementäres Arretierungsgegenelement (30) an der Zentraleinheit (18) aufweist, wobei das Arretierungselement (28) in einer Lagerbolzenarretierungsstellung den Lagerbolzen (16) rotationsarretierend in das Arretierungsgegenelement (30) lösbar eingreift.

9. Transportstern nach Anspruch 8,
**dadurch gekennzeichnet, dass**
das Arretierungselement (28) als ein Innen-n-Kant, insbesondere Innen-12-Kant und das Arretierungsgegenelement (30) als ein komplementärer Außen-n-Kant, insbesondere Außen-12-Kant ausgebildet ist.

10. Transportstern nach Anspruch 8 oder 9,
**dadurch gekennzeichnet, dass**
das Arretierungselement (28) und das Arretierungsgegenelement (30) derart ausgebildet sind, das der Arretierungseingriff durch eine Axialverschiebung in Richtung der Justierachse (A_{J}) des Lagerbolzens (16) lösbar und durch eine entgegengesetzte Axialverschiebung wieder herstellbar ist.

11. Transportstern nach einem der vorhergehenden Ansprüche,
**dadurch gekennzeichnet, dass**
das der Lagerbolzen (16) und insbesondere der Lagerbolzenkopf (22) und/oder der Lagerbolzenfuss (24) ein Justiermittel (36) und insbesondere einen von der Außenseite des Transportsterns (1) frei zugänglichen Innen-6-Kant aufweisen, zur Manipulation des Arretierungseingriffes zwischen Arretierungselement (28) und Arretierungsgegenelement (30) und/oder zur Rotation des Lagerbolzens (16) zur Einstellung des Wirkeingriffes der Zentrierverzahnung (8).

12. Transportstern nach einem der vorhergehenden Ansprüche,
**gekennzeichnet durch**
ein Fixiermittel zur lösbaren Arretierung des Lagerbolzens (16) gegen eine Verschiebung in Axialrichtung.

13. Transportstern nach einem der Ansprüche 4 bis 12*,*
**dadurch gekennzeichnet, dass**
der Lagerbolzenkopf (22) und/oder der Lagerbolzenfuss (24) über wenigstens ein Befestigungsmittel (38), insbesondere lösbar am Lagerzylinder (14) angeordnet sind.

## Claims

1. A star wheel conveyor for containers or such similar bodies having a rotatable base body (2) and a plurality of gripper devices (4) distributed over its circumference for gripping containers, wherein each gripper device (4) comprises a pair of corresponding grip arms (6), arranged in particular radially with respect to the base body (2), which are coupled to one another in their gripping movement by a centering tooth (8), wherein
at least one grip arm (6) comprises an adjusting device (10) by means of which the operative engagement of the centering tooth (8) can be adjusted, **characterized in that**
the at least one grip arm (6) is mounted to a central unit (18) of the gripper device (2) via an eccentric bearing cylinder (14) of a bearing pin (16), wherein the eccentric bearing cylinder (14) acts as an adjusting device (10) upon a rotation of the bearing pin (16).

2. The star wheel conveyor according to claim 1,
wherein the centering tooth (8) is a rotary tooth having at least two complementary interlocking elements (12) configured on the corresponding grip arms (6) and arranged concentric to their rotational axes (A_{R}), **characterized in that**
the tooth element (12) arranged on the at least one grip arm (6) is movable for adjusting a substantially play-free rotary tooth relative the other complementary tooth element (12) by means of the adjusting device (10).

3. The star wheel conveyor according to any one of the preceding claims,
**characterized in that**
the bearing pin (16) penetrates through a bearing bore (20) of the grip arm (6) configured complementary to the eccentric bearing cylinder (14).

4. The star wheel conveyor according to any one of the preceding claims,
**characterized in that**
the bearing pin (16), in particular at its free ends, exhibits a bearing pin head (22) and a bearing pin base (24) concentric to an adjusting axis (A_{J}) of the bearing pin (16) which are arranged in complementary bearing pin receivers (32; 34) on the central unit (18), and wherein the cylinder axis (A_{R}) of the eccentric bearing cylinder (14) is arranged eccentrically and with its axis parallel to the adjusting axis (A_{J}).

5. The star wheel conveyor according to claim 4,
**characterized in that**
the outer circumference of the bearing pin head (22) and the bearing pin base (24) are of rotational symmetrical configuration.

6. The star wheel conveyor according to claim 4 or 5,
**characterized in that**
the eccentric bearing cylinder (14) is arranged between the bearing pin head (22) and the bearing pin base (24) in the direction of the adjusting axis (A_{J}).

7. The star wheel conveyor according to any one of the preceding claims,
**characterized in that**
the bearing pin (16) is releasably mounted, in particular to be rotationally-lockable, in the central unit (18) of the gripper device (2) by means of a locking device (26).

8. The star wheel conveyor according to claim 7,
**characterized in that**
the locking device (26) comprises a locking element (28) on the bearing pin head (22) and/or bearing pin base (24) and at least one complementary locking counter-element (30) on the central unit (18), wherein the locking element (28) releasably engages in the locking counter-element (30) to be rotationally-locked in a bearing pin locking position of the bearing pin (16).

9. The star wheel conveyor according to claim 8,
**characterized in that**
the locking element (28) is configured as an inside n-point socket, in particular an inside 12-point socket, and locking counter-element (30) is configured as a complementary outer n-point flange head, in particular an outer 12-point flange head.

10. The star wheel conveyor according to claim 8 or 9,
**characterized in that**
the locking element (28) and locking counter-element (30) are configured such that the locking engagement can be released by an axial displacement of the bearing pin (16) toward the adjusting axis (A_{J}) and can be restored again by the reverse axial displacement.

11. The star wheel conveyor according to any one of the preceding claims,
**characterized in that**
the bearing pin (16) and in particular the bearing pin head (22) and/or the bearing pin base (24) comprises adjusting means (36), and in particular an inside hexagonal socket freely accessible from the outside of the star wheel conveyor (1), for manipulating the locking engagement between locking element (28) and locking counter-element (30) and/or for rotating the bearing pin (16) to adjust the operative engagement of the centering tooth (8).

12. The star wheel conveyor according to any one of the preceding claims,
**characterized by**
fixing means for releasably locking the bearing pin (16) against axial displacement.

13. The star wheel conveyor according to any one of claims 4 to 12,
**characterized in that**
the bearing pin head (22) and/or the bearing pin base (24) are arranged on the bearing cylinder (14), in particular releasably, by means of at least one fastening means (38).

## Revendications

1. Transporteur de type carrousel pour récipients ou pour des corps analogues, comprenant un corps de base rotatif (2) et plusieurs moyens de saisie (4) répartis sur sa périphérie pour saisir les récipients, dans lequel chaque moyen de saisie (4) comprend des bras de saisie (6) qui se correspondent par paires et sont en particulier agencés radialement par rapport au corps de base (2), lesquels sont accouplés l'un à l'autre dans leur mouvement de saisie par une denture de centrage (8),
dans lequel au moins un bras de saisie (6) comprend un dispositif d'ajustement (10) au moyen duquel l'engagement actif de la denture de centrage (8) est réglable,
**caractérisé en ce que**
ledit au moins un bras de saisie (6) est monté sur une unité centrale (18) du moyen de saisie (2) via un cylindre de palier excentrique (14) d'un goujon de palier (16), et le cylindre de palier excentrique (14) fait office de dispositif d'ajustement (10) lors d'une rotation du goujon de palier (16).

2. Transporteur de type carrousel selon la revendication 1,
dans lequel la denture de centrage (8) est une denture rotative avec au moins deux éléments de denture complémentaires (12), qui sont réalisés sur les bras de saisie correspondants (6) et sont agencés concentriquement à leurs axes de rotation (A_{R}),
**caractérisé en ce que**
l'élément de denture (12) agencé sur ledit au moins un bras de saisie (6) est déplaçable au moyen du dispositif d'ajustement (10), pour le réglage d'une denture rotative sensiblement sans jeu, en direction de l'autre élément de denture complémentaire (12).

3. Transporteur de type carrousel selon l'une des revendications précédentes,
**caractérisé en ce que** le goujon de palier (16) traverse un perçage de palier (20) du bras de saisie (6), qui est réalisé de façon complémentaire au cylindre de palier excentrique (14).

4. Transporteur de type carrousel selon l'une des revendications précédentes,
**caractérisé en ce que** le goujon de palier (16) comprend, en particulier à ses extrémités libres et concentriquement à un axe d'ajustement (A_{J}) du goujon de palier (16), une tête de goujon (22) et un pied de goujon (24) qui sont agencés dans des logements de goujon complémentaires (32 ; 34) sur l'unité centrale (18), et dans lequel l'axe de cylindre (AR) du cylindre de palier excentrique (14) est agencé de manière excentrique et parallèle à l'axe ajustement (A_{J}).

5. Transporteur de type carrousel selon la revendication 4,
**caractérisé en ce que** la tête de goujon (22) et le pied de goujon (24) sont réalisés à leur périphérie extérieure avec symétrie de révolution.

6. Transporteur de type carrousel selon la revendication 4 ou 5,
**caractérisé en ce que** le cylindre de palier excentrique (14) est agencé entre la tête de goujon (22) et le pied de goujon (24) en direction de l'axe d'ajustement (A_{J}).

7. Transporteur de type carrousel selon l'une des revendications précédentes,
**caractérisé en ce que** le goujon de palier (16) est monté de façon détachable dans l'unité centrale (18) du moyen de saisie (2) au moyen d'un système de blocage (26), en particulier susceptible d'être bloqué en rotation.

8. Transporteur de type carrousel selon la revendication 7,
**caractérisé en ce que** le système de blocage (26) comprend un élément de blocage (28) sur la tête de goujon (22) et/ou sur le pied de goujon (24) et au moins un élément de blocage antagoniste (30) complémentaire sur l'unité centrale (18), dans lequel l'élément de blocage (28) s'engage de façon détachable dans l'élément de blocage antagoniste (30) dans une position de blocage en bloquant la rotation du goujon de palier (16).

9. Transporteur de type carrousel selon la revendication 8,
**caractérisé en ce que** l'élément de blocage (28) est réalisé sous forme d'empreinte creuse polygonale, en particulier d'empreinte creuse à 12 côtés, et l'élément de blocage antagoniste (30) et réalisé sous forme de relief polygonal complémentaire, en particulier sous forme de relief à 12 côtés.

10. Transporteur de type carrousel selon la revendication 8 ou 9,
**caractérisé en ce que** l'élément de blocage (28) et l'élément de blocage antagoniste (30) sont réalisés de telle façon que l'engagement de blocage peut être détaché par un déplacement axial en direction de l'axe d'ajustement (A_{J}) du goujon de palier (16), et peut être rétabli par un déplacement axial en sens opposé.

11. Transporteur de type carrousel selon l'une des revendications précédentes,
**caractérisé en ce que** le goujon de palier (16) et en particulier la tête de goujon (22) et/ou le pied de goujon (24) comprend un organe d'ajustement (36), et en particulier une empreinte creuse hexagonale librement accessible depuis le côté extérieur du transporteur (1) de type carrousel, pour la manipulation de l'engagement de blocage entre l'élément de blocage (28) et l'élément de blocage antagoniste (30) et/ou pour mettre en rotation le goujon de palier (16) pour régler l'engagement d'action de la denture de centrage (8).

12. Transporteur de type carrousel selon l'une des revendications précédentes,
**caractérisé par** un organe de fixation pour le blocage détachable du goujon de palier (16) à l'encontre d'un déplacement en direction axiale.

13. Transporteur de type carrousel selon l'une des revendications 4 à 12,
**caractérisé en ce que** la tête de goujon (22) et/ou le pied de goujon (24) sont agencés sur le cylindre de palier (14) via au moins un organe de fixation (38), en particulier de façon détachable.
